# EUROPEAN PATENT APPLICATION

(11) **EP 4 701 257 A1**
(43) Date of publication of application: **25.02.2026**
(21) Application number: 24814171.5
(22) Date of filing: 15.05.2024
(51) Int. Cl.: H04W 24/02, H04W 84/00

(54) **QOS GUARANTEE METHOD FOR FIXED, MOBILE AND SATELLITE CONVERGENCE NETWORK, AND APPARATUS**

(30) Priority: 31.05.2023 CN 202310635021
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SHI, Nanxiang, Beijing 100053 (CN); LU, Lu, Beijing 100053 (CN)
(74) Representative: Hertin und Partner Rechts- und Patentanwälte PartG mbB
(86) International application number: PCT/CN2024/093261
(87) International publication number: WO 2024/244971

(57) **Abstract**

A method and apparatus for Quality of Service (QoS) guarantee of a Fixed, Mobile and Satellite Convergence (FMSC) network are provided. The method includes: generating a network-customized QoS policy; sending the network-customized QoS policy, wherein a recipient of the network-customized QoS policy includes one or more of: a space-based core network, a terrestrial core network, a fixed access network, a mobile access network, a satellite access network, a multi-connectivity terminal, a terrestrial service platform, and a space-based service platform.

## Description

### CROSS-REFERENCE TO RELATED APPLICATION

The present application claims a priority to the Chinese patent application No. 202310635021.X filed in China on May 31, 2023, a disclosure of which is incorporated herein by reference in its entirety.

### TECHNICAL FIELD

This application relates to the field of communication technology, and in particular, to a method and apparatus for Quality of Service (QoS) guarantee of a Fixed, Mobile and Satellite Convergence (FMSC) network.

### BACKGROUND

Fixed, Mobile and Satellite Convergence (FMSC) network supports the provision of information and communication services such as voice, video, messaging, data, broadcast/multicast, edge computing, network slicing, an industry private network, international roaming, and an international communication to a multi-connectivity terminal user through two or more access methods of fixed access, mobile access, and satellite access. This forms a multi-access converged network that integrates terrestrial and space-based domains.

Quality of Service (QoS) guarantee is a fundamental capability of a mobile network, providing guarantees in bandwidth, latency, jitter, packet loss rate, and other aspects for communication services such as voice, video, messaging, and data used by users. Depending on the requirements of the communication service, a QoS flow can be either Guaranteed Bit Rate (GBR) or Non-Guaranteed Bit Rate (Non-GBR).

To ensure a satisfactory user experience for communication services, QoS guarantee is a fundamental capability in fixed, mobile, and satellite networks. However, in the prior art, no relevant QoS guarantee mechanism has yet been proposed for the FMSC network.

### SUMMARY

Embodiments of the present disclosure provides a Quality of Service (QoS) guarantee method, apparatus, system, and medium for a Fixed, Mobile and Satellite Convergence (FMSC) network, so as to provide a QoS guarantee mechanism for the FMSC network.

In a first aspect, an embodiment of the present disclosure provides a QoS guarantee method for an FMSC network, applied to a first space-based core network device or a first terrestrial core network device, including:
generating a network-customized QoS policy;
sending the network-customized QoS policy, wherein a recipient of the network-customized QoS policy includes one or more of:
   a space-based core network, a terrestrial core network, a fixed access network, a mobile access network, a satellite access network, a multi-connectivity terminal, a terrestrial service platform, and a space-based service platform;
   wherein the network-customized QoS policy includes one or more of: a QoS policy at Protocol Data Unit (PDU) granularity; a QoS policy at flow granularity; a QoS policy at service granularity; and a QoS policy at user granularity.

Optionally, generating the network-customized QoS policy includes:
determining a total QoS-guaranteed network resource requirement of the first space-based core network device or the first terrestrial core network device;
generating the network-customized QoS policy based on a matching condition between a network resource of the first space-based core network device or the first terrestrial core network device and the total QoS-guaranteed network resource requirement.

Optionally, the determining the total QoS-guaranteed network resource requirement of the first space-based core network device or the first terrestrial core network device includes:
determining the QoS-guaranteed network resource requirement of a user at each level of the first space-based core network device or the first terrestrial core network device;
determining, based on the QoS-guaranteed network resource requirement of the user at each level, the total QoS-guaranteed network resource requirement of the first space-based core network device or the first terrestrial core network device.

Optionally, generating the network-customized QoS policy based on the matching condition between the network resource of the first space-based core network device or the first terrestrial core network device and the total QoS-guaranteed network resource requirement includes:
when the total QoS-guaranteed network resource requirement is greater than or equal to the network resource of the first space-based core network device or the first terrestrial core network device, generating the network-customized QoS policy, wherein the network-customized QoS policy includes:
providing a QoS-guaranteed service to a user according to a preset QoS guarantee level; or
upgrading QoS guarantee for users at a part or all of QoS guarantee levels.

Optionally, the method further includes:
when the first space-based core network device or the first terrestrial core network device is a handover target space-based core network device or terrestrial core network device, providing a QoS-guaranteed service to a user according to a preset QoS guarantee level.

Optionally, the method further includes:
performing inter-network QoS collaborative management with a second space-based core network device and/or a second terrestrial core network device.

Optionally, the performing the inter-network QoS collaborative management with the second space-based core network device and/or the second terrestrial core network device includes:
performing inter-network QoS guarantee level negotiation or inter-network QoS guarantee mechanism negotiation with the second space-based core network device and/or the second terrestrial core network device.

Optionally, the performing the inter-network QoS guarantee level negotiation or the inter-network QoS guarantee mechanism negotiation with the second space-based core network device and/or the second terrestrial core network device includes:
performing, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
sending the first QoS-guaranteed network capability evaluation result and/or the first QoS-guaranteed network resource evaluation result to the second space-based core network device and/or the second terrestrial core network device.

Optionally, the method further includes:
classifying users of the first space-based core network device and/or the first terrestrial core network device to obtain a classification result;
sending a user-customized QoS requirement configuration of the users of the first space-based core network device and/or the first terrestrial core network device and the classification result to the second space-based core network device and/or the second terrestrial core network device.

Optionally, the method further includes:
performing capability negotiation with a space-based service platform or a terrestrial service platform, to generate a configuration template of a QoS-guarantee-related indicator.

Optionally, the method further includes:
sending the configuration template of the QoS-guarantee-related indicator.

Optionally, the method further includes:
receiving a user-customized QoS requirement configuration, wherein the user-customized QoS requirement configuration is obtained based on the configuration template of the QoS-guarantee-related indicator.

Optionally, the configuration template of the QoS-guarantee-related indicator includes: a QoS-guarantee-related indicator; an access type option; and a QoS guarantee level option corresponding to the access type option.

In a second aspect, an embodiment of the present disclosure provides a Quality of Service (QoS) guarantee method for a Fixed, Mobile and Satellite Convergence (FMSC) network, applied to a multi-connectivity terminal, including:
receiving a network-customized QoS policy;
executing the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the method further includes:
receiving a configuration template of a QoS-guarantee-related indicator;
generating a user-customized QoS requirement configuration based on the configuration template of the QoS-guarantee-related indicator;
sending the user-customized QoS requirement configuration.

In a third aspect, an embodiment of the present disclosure provides a Quality of Service (QoS) guarantee method for a Fixed, Mobile and Satellite Convergence (FMSC) network, applied to one or more of a fixed access network, a mobile access network, a satellite access network, a terrestrial service platform, and a space-based service platform, including:
receiving a network-customized QoS policy;
executing the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the method is applied to a terrestrial service platform or a space-based service platform, and the method further includes:
performing capability negotiation with a terrestrial core network device or a space-based core network device, to generate a configuration template for a QoS-guarantee-related indicator.

In a fourth aspect, an embodiment of the present disclosure provides a Quality of Service (QoS) guarantee system for a Fixed, Mobile and Satellite Convergence (FMSC) network, including:
a space-based core network device arranged in a space-based core network, a terrestrial core network device arranged in a terrestrial core network, a fixed access network, a mobile access network, a satellite access network, a multi-connectivity terminal, a terrestrial service platform, and a space-based service platform;
wherein the space-based core network device or the terrestrial core network device is configured to generate and send a network-customized QoS policy, wherein a recipient of the network-customized QoS policy includes one or more of: the space-based core network, the terrestrial core network, the fixed access network, the mobile access network, the satellite access network, the multi-connectivity terminal, the terrestrial service platform, and the space-based service platform;
one or more of the multi-connectivity terminals, the fixed access network, the mobile access network, the satellite access network, the terrestrial service platform, and the space-based service platform are configured to receive and execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

In a fifth aspect, an embodiment of the present disclosure provides a Quality of Service (QoS) guarantee apparatus for a Fixed, Mobile and Satellite Convergence (FMSC) network, applied to a first space-based core network device or a first terrestrial core network device, including:
a first generation module, configured to generate a network-customized QoS policy.
a first sending module, configured to send the network-customized QoS policy, wherein a recipient of the network-customized QoS policy includes one or more of:
   a space-based core network, a terrestrial core network, a fixed access network, a mobile access network, a satellite access network, a multi-connectivity terminal, a terrestrial service platform, and a space-based service platform;
   wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the first generation module includes:
a determination submodule, configured to determine a total QoS-guaranteed network resource requirement of the first space-based core network device or the first terrestrial core network device;
a generation submodule, configured to generate the network-customized QoS policy based on a matching condition between a network resource of the first space-based core network device or the first terrestrial core network device and the total QoS-guaranteed network resource requirement.

Optionally, the determination submodule is configured to:
determine the QoS-guaranteed network resource requirement of a user at each level of the first space-based core network device or the first terrestrial core network device;
determine, based on the QoS-guaranteed network resource requirement of the user at each level, the total QoS-guaranteed network resource requirement of the first space-based core network device or the first terrestrial core network device.

Optionally, the generation submodule is configured to:
when the total QoS-guaranteed network resource requirement is greater than or equal to the network resource of the first space-based core network device or the first terrestrial core network device, generate the network-customized QoS policy, wherein the network-customized QoS policy includes:
providing a QoS-guaranteed service to a user according to a preset QoS guarantee level; or
upgrading QoS guarantee for users at a part or all of QoS guarantee levels.

Optionally, the apparatus may further include:
a first processing module, configured to provide a QoS-guaranteed service to a user according to a preset QoS guarantee level when the first space-based core network device or the first terrestrial core network device is a handover target space-based core network device or terrestrial core network device.

Optionally, the apparatus may further include:
a second processing module, configured to perform inter-network QoS collaborative management with a second space-based core network device and/or a second terrestrial core network device.

Optionally, the second processing module is further configured to:
perform inter-network QoS guarantee level negotiation or inter-network QoS guarantee mechanism negotiation with the second space-based core network device and/or the second terrestrial core network device.

Optionally, the second processing module is further configured to:
perform, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
send the first QoS-guaranteed network capability evaluation result and/or the first QoS-guaranteed network resource evaluation result to the second space-based core network device and/or the second terrestrial core network device.

Optionally, the apparatus may further include:
a third processing module, configured to classify users of the first space-based core network device and/or the first terrestrial core network device to obtain a classification result;
a second sending module, configured to send a user-customized QoS requirement configuration of the users of the first space-based core network device and/or the first terrestrial core network device and the classification result to the second space-based core network device and/or the second terrestrial core network device.

Optionally, the apparatus may further include:
a second generation module, configured to perform capability negotiation with a space-based service platform or a terrestrial service platform, to generate a configuration template of a QoS-guarantee-related indicator.

Optionally, the apparatus may further include:
a third sending module, configured to send the configuration template of the QoS-guarantee-related indicator.

Optionally, the apparatus may further include:
a first receiving module, configured to receive a user-customized QoS requirement configuration, wherein the user-customized QoS requirement configuration is obtained based on the configuration template of the QoS-guarantee-related indicator.

Optionally, the configuration template of the QoS-guarantee-related indicator includes: a QoS-guarantee-related indicator; an access type option; and a QoS guarantee level option corresponding to the access type option.

In a sixth aspect, an embodiment of the present disclosure provides a Quality of Service (QoS) guarantee apparatus for a Fixed, Mobile and Satellite Convergence (FMSC) network, applied to a multi-connectivity terminal, including:
a first receiving module, configured to receive a network-customized QoS policy;
a first processing module, configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus may further include:
a second receiving module, configured to receive a configuration template of a QoS-guarantee-related indicator;
a first generation module, configured to generate a user-customized QoS requirement configuration based on the configuration template of the QoS-guarantee-related indicator;
a first sending module, configured to send the user-customized QoS requirement configuration.

In a seventh aspect, an embodiment of the present disclosure provides a Quality of Service (QoS) guarantee apparatus for a Fixed, Mobile and Satellite Convergence (FMSC) network, applied to one or more of a fixed access network, a mobile access network, a satellite access network, a terrestrial service platform, and a space-based service platform, including:
a first receiving module, configured to receive a network-customized QoS policy;
a first processing module, configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus is applied to a terrestrial service platform or a space-based service platform, and the apparatus further includes:
a second processing module, configured to perform capability negotiation with terrestrial core network device or space-based core network device, to generate a configuration template of a QoS-guarantee-related indicator.

In an eighth aspect, an embodiment of the present disclosure provides a Quality of Service (QoS) guarantee apparatus for a Fixed, Mobile and Satellite Convergence (FMSC) network, applied to a first space-based core network device or a first terrestrial core network device, including: a processor and a transceiver;
the processor is configured to generate a network-customized QoS policy;
the transceiver is configured to send the network-customized QoS policy, wherein a recipient of the network-customized QoS policy includes one or more of:
   a space-based core network, a terrestrial core network, a fixed access network, a mobile access network, a satellite access network, a multi-connectivity terminal, a terrestrial service platform, and a space-based service platform;
   wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the processor is further configured to:
determine a total QoS-guaranteed network resource requirement of the first space-based core network device or the first terrestrial core network device;
generate the network-customized QoS policy based on a matching condition between a network resource of the first space-based core network device or the first terrestrial core network device and the total QoS-guaranteed network resource requirement.

Optionally, the processor is further configured to:
determine the QoS-guaranteed network resource requirement of a user at each level of the first space-based core network device or the first terrestrial core network device;
determine, based on the QoS-guaranteed network resource requirement of the user at each level, the total QoS-guaranteed network resource requirement of the first space-based core network device or the first terrestrial core network device.

Optionally, the processor is further configured to:
when the total QoS-guaranteed network resource requirement is greater than or equal to the network resource of the first space-based core network device or the first terrestrial core network device, generate the network-customized QoS policy, wherein the network-customized QoS policy includes:
providing a QoS-guaranteed service to a user according to a preset QoS guarantee level; or
upgrading QoS guarantee for users at a part or all of QoS guarantee levels.

Optionally, the processor is further configured to:
when the first space-based core network device or the first terrestrial core network device is a handover target space-based core network device or terrestrial core network device, provide a QoS-guaranteed service to a user according to a preset QoS guarantee level.

Optionally, the processor is further configured to:
perform inter-network QoS collaborative management with a second space-based core network device and/or a second terrestrial core network device.

Optionally, the processor is further configured to:
perform inter-network QoS guarantee level negotiation or inter-network QoS guarantee mechanism negotiation with the second space-based core network device and/or the second terrestrial core network device.

Optionally, the processor is further configured to:
perform, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
send the first QoS-guaranteed network capability evaluation result and/or the first QoS-guaranteed network resource evaluation result to the second space-based core network device and/or the second terrestrial core network device.

Optionally, the processor is further configured to:
classify users of the first space-based core network device and/or the first terrestrial core network device to obtain a classification result;
send a user-customized QoS requirement configuration of the users of the first space-based core network device and/or the first terrestrial core network device and the classification result to the second space-based core network device and/or the second terrestrial core network device.

Optionally, the processor is further configured to:
perform capability negotiation with a space-based service platform or a terrestrial service platform, to generate a configuration template of a QoS-guarantee-related indicator.

Optionally, the transceiver is further configured to:
send the configuration template of the QoS-guarantee-related indicator.

Optionally, the transceiver is further configured to:
receive a user-customized QoS requirement configuration, wherein the user-customized QoS requirement configuration is obtained based on the configuration template of the QoS-guarantee-related indicator.

Optionally, the configuration template of the QoS-guarantee-related indicator includes: a QoS-guarantee-related indicator; a QoS-guarantee-related indicator; an access type option; and a QoS guarantee level option corresponding to the access type option.

In a ninth aspect, an embodiment of the present disclosure provides a Quality of Service (QoS) guarantee apparatus for a Fixed, Mobile and Satellite Convergence (FMSC) network, applied to a multi-connectivity terminal, including: a processor and a transceiver;
the transceiver is configured to receive a network-customized QoS policy;
the processor is configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the processor is further configured to:
receive a configuration template of a QoS-guarantee-related indicator;
generate a user-customized QoS requirement configuration based on the configuration template of the QoS-guarantee-related indicator;
send the user-customized QoS requirement configuration.

In a tenth aspect, an embodiment of the present disclosure provides a Quality of Service (QoS) guarantee apparatus for a Fixed, Mobile and Satellite Convergence (FMSC) network, applied to one or more of a fixed access network, a mobile access network, a satellite access network, a terrestrial service platform, and a space-based service platform, including: a processor and a transceiver;
the transceiver is configured to receive a network-customized QoS policy;
the processor is configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus is applied to a terrestrial service platform or a space-based service platform;
the processor is further configured to perform capability negotiation with a terrestrial core network device or a space-based core network device, to generate a configuration template of a QoS-guarantee-related indicator.

In an eleventh aspect, an embodiment of the present disclosure further provides a communication device, including: a memory, a processor, and a program stored in the memory and used to be executed by the processor, wherein the processor is configured to execute the program to implement the steps of the QoS guarantee method for the FMSC network as described above.

In a twelfth aspect, an embodiment of the present disclosure further provides a readable storage medium for storing a program, wherein the program is used to be executed by a processor to implement the steps of the QoS guarantee method for the FMSC network as described above.

In the embodiments of the present disclosure, the first space-based core network device or the first terrestrial core network device generates and sends a network-customized policy to other devices or entities, thereby providing a QoS guarantee mechanism for the FMSC network.

### BRIEF DESCRIPTION OF THE DRAWINGS

FIG. 1 is a schematic diagram of a QoS guarantee system for a Fixed, Mobile and Satellite Convergence (FMSC) network provided in an embodiment of the present disclosure;
FIG. 2 is a flowchart of a QoS guarantee method for an FMSC network provided in an embodiment of the present disclosure;
FIG. 3 is a flowchart of a QoS guarantee method for an FMSC network provided in an embodiment of the present disclosure;
FIG. 4 is a flowchart of a QoS guarantee method for an FMSC network provided in an embodiment of the present disclosure;
FIG. 5 is a flowchart of a QoS guarantee method for an FMSC network provided in an embodiment of the present disclosure;
FIG. 6 is a structural diagram of a QoS guarantee apparatus for an FMSC network provided in an embodiment of the present disclosure;
FIG. 7 is a structural diagram of a QoS guarantee apparatus for an FMSC network provided in an embodiment of the present disclosure;
FIG. 8 is a structural diagram of a QoS guarantee apparatus for an FMSC network provided in an embodiment of the present disclosure;
FIG. 9 is a structural diagram of a QoS guarantee apparatus for an FMSC network provided in an embodiment of the present disclosure;
FIG. 10 is a structural diagram of a QoS guarantee apparatus for an FMSC network provided in an embodiment of the present disclosure;
FIG. 11 is a structural diagram of a QoS guarantee apparatus for an FMSC network provided in an embodiment of the present disclosure.

### DETAILED DESCRIPTION

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In an embodiment of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

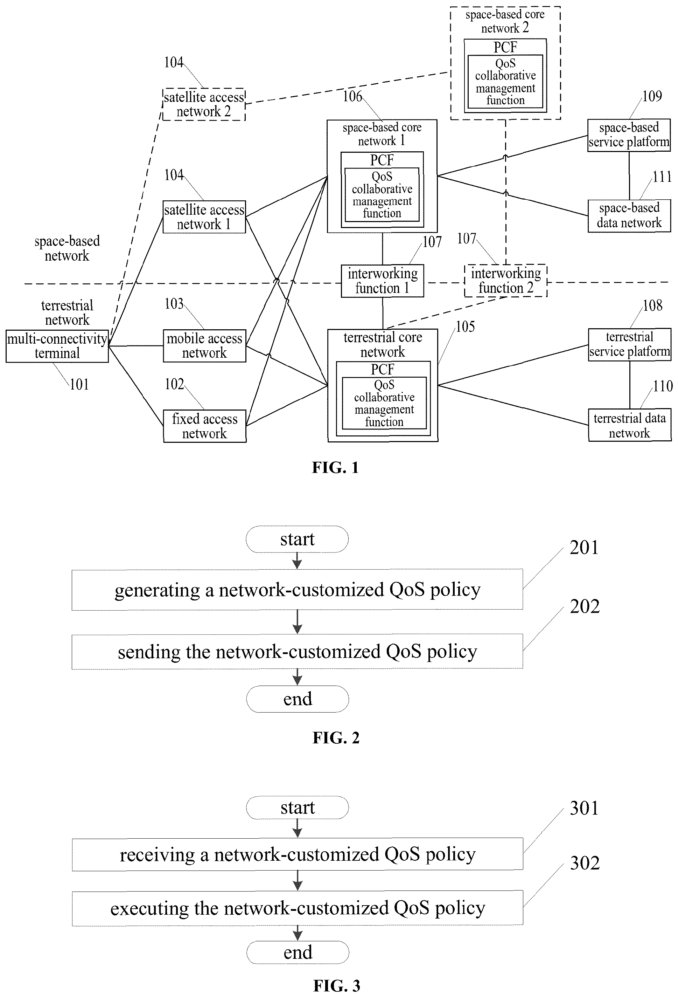

Referring to FIG. 1, it is a schematic diagram of a Quality of Service (QoS) guarantee system for a Fixed, Mobile and Satellite Convergence (FMSC) network provided in an embodiment of the present disclosure.

The QoS guarantee system for the FMSC network includes logical units such as a multi-connectivity terminal 101, a fixed access network 102/mobile access network 103/satellite access network 104, a terrestrial core network 105/space-based core network 106, an interworking function 107, a terrestrial service platform 108/space-based service platform 109, etc. Optionally, it may further include terrestrial data network 110/space-based data network 111, etc.

The terrestrial core network 105 is equipped with terrestrial core network devices such as a Policy Control Function (PCF) entity, and the space-based core network 106 is equipped with space-based core network devices such as a PCF. Both the space-based and terrestrial core network devices have QoS collaborative management functions. Each terrestrial/space-based core network device in this system can serve as the first terrestrial core network device/first space-based core network device in the embodiments of the present disclosure. Accordingly, another terrestrial core network device/space-based core network device serves as a second terrestrial core network device/second space-based core network device in an embodiment of the present disclosure.

The space-based core network device or the terrestrial core network device is configured to generate and send a network-customized QoS policy. A recipient of the network-customized QoS policy includes one or more of: a space-based core network, a terrestrial core network, a fixed access network, a mobile access network, a satellite access network, a multi-connectivity terminal, a terrestrial service platform, and a space-based service platform.

Accordingly, one or more of the multi-connectivity terminals, fixed access network, mobile access network, satellite access network, multi-connectivity terminal, terrestrial service platform, and space-based service platform are used to receive and execute the network-customized QoS policy.

The network-customized QoS policy includes one or more of: a QoS policy at Protocol Data Unit (PDU) granularity; a QoS policy at flow granularity; a QoS policy at service granularity; and a QoS policy at user granularity.

The main functions of each logical unit are described in detail below.
1) Multi-connectivity terminal, which supports fixed access, mobile access, and satellite access. The satellite access includes one or more of: Low Earth Orbit (LEO), Medium Earth Orbit (MEO), and Geosynchronous Earth Orbit (GEO). It supports user-customized QoS requirement configuration and synchronizes it with the QoS collaborative management function of the Policy Control Function (PCF) in the terrestrial/space-based core network. It also supports the execution of the network-customized QoS policies at Protocol Data Unit (PDU) session granularity, flow granularity, service granularity, and user granularity issued by the terrestrial/space-based core network.
2) Fixed access network/mobile access network/satellite access network, which supports the execution of network-customized QoS policies at the PDU session granularity, flow granularity, service granularity, and user granularity issued by the terrestrial/space-based core network.
3) Terrestrial core network/space-based core network, which supports adding the QoS collaborative management function to the PCF, receiving and processing a user-customized QoS requirement, performing inter-network QoS collaborative management with other QoS collaborative management functions, generating network-customized QoS policies at the PDU session granularity, flow granularity, service granularity, and user granularity. It also supports delivering the network-customized QoS policy to terrestrial core network/space-based core network, fixed access network/mobile access network/satellite access network, multi-connectivity terminal, and terrestrial service platform/space-based service platform.
4) Interworking function, which enables interoperability between the terrestrial core network and the space-based core network.
5) Terrestrial data network/space-based data network, which provides internet access.
6) Terrestrial service platform/space-based service platform, which generates a configuration template of a QoS-guarantee-related indicator through capability negotiation with the QoS collaborative management function of the PCF in the terrestrial/space-based core network; supports the execution of network-customized QoS policies at the PDU session granularity, flow granularity, service granularity, and user granularity issued by the terrestrial core network/space-based core network; provides communication services and information services such as voice, video, messaging, and data with QoS guarantee support.

In an embodiment of the present disclosure, the end-to-end and systematic enhancements are achieved for the FMSC network environments, providing multi-connectivity, customized, and differentiated QoS-guaranteed services. This approach meets the QoS assurance requirements of multiple types of networks and users, while avoiding network congestion caused by certain users or services occupying excessive resources.

Referring to FIG. 2, it is a flowchart of a QoS guarantee method for an FMSC network provided in an embodiment of the present disclosure. The method is applied to a first space-based core network device or a first terrestrial core network device and may include the following steps.

Step 201: generating a network-customized QoS policy.

The QoS collaborative management function of the first space-based core network device or the first terrestrial core network device generates a network-customized QoS policy according to the scenario, and delivers the customized QoS policy to the terrestrial/space-based core network, fixed/mobile/satellite access network, and multi-connectivity terminal for execution.

During the process of generating a network-customized QoS policy, the first space-based core network device or the first terrestrial core network device determines the total QoS-guaranteed network resource requirement of the first space-based core network device or the first terrestrial core network device, and generates the customized QoS policy based on the matching condition between the network resources of the first space-based core network device or the first terrestrial core network device and the total QoS-guaranteed network resource requirement.

The total QoS-guaranteed network resource requirement of the first space-based core network device or the first terrestrial core network device is determined as follows:
determining the QoS-guaranteed network resource requirement of a user at each level of the first space-based core network device or the first terrestrial core network device; and determining, based on the QoS-guaranteed network resource requirement of the user at each level, the total QoS-guaranteed network resource requirement of the first space-based core network device or the first terrestrial core network device.

Specifically, the QoS collaborative management function of the first space-based core network device or the first terrestrial core network device obtains the list of QoS-guaranteed users registered in the core network from the United Security Management (USM)/Unified Data Management (UDM) of the core network. It then calculates the QoS-guaranteed network resource requirement of a user at each level in the terrestrial network/space-based network, as well as the total QoS-guaranteed network resource requirements of all users in the terrestrial network/space-based network.

For example, the QoS-guaranteed network resource requirement of a user at each level may be calculated as the sum of the QoS-guaranteed network resource requirements of all users at that level, or it may be obtained by applying a specific transformation based on the QoS-guaranteed network resource requirements of users at each level.

When generating the network-customized QoS policy based on the matching condition between the network resources of the first space-based core network device or the first terrestrial core network device and the total QoS-guaranteed network resource requirement, if the total QoS-guaranteed network resource requirement is greater than or equal to the network resources of the first space-based core network device or the first terrestrial core network device, the network-customized QoS policy is generated. The network-customized QoS policy includes:
providing a QoS-guaranteed service to a user according to a preset QoS guarantee level; or upgrading QoS guarantee for users at a part or all of QoS guarantee levels. The preset QoS guarantee level can be configured as needed.

In an embodiment of the present disclosure, when the first space-based core network device or the first terrestrial core network device is a handover target space-based core network device or terrestrial core network device, it can further provide QoS-guaranteed services to the user according to a preset QoS guarantee level. The preset QoS guarantee level can be configured as needed.

For example, when the multi-connectivity terminal switches between a terrestrial network and a space-based network, the QoS collaborative management function of the PCF in a handover target terrestrial core network/space-based core network provides QoS-guaranteed services to users according to the preset QoS guarantee level, ensuring the service experience for users during access switching.

Step 202: sending the network-customized QoS policy, wherein a recipient of the network-customized QoS policy includes one or more of:
a space-based core network, a terrestrial core network, a fixed access network, a mobile access network, a satellite access network, a multi-connectivity terminal, a terrestrial service platform, and a space-based service platform;
wherein the network-customized QoS policy includes one or more of: a QoS policy at Protocol Data Unit (PDU) granularity; a QoS policy at flow granularity; a QoS policy at service granularity; and a QoS policy at user granularity.

The QoS policy includes, but is not limited to, guarantees for bandwidth, latency, jitter, packet loss rate, etc.

In an embodiment of the present disclosure, the first space-based core network device or the first terrestrial core network device is configured to generate and send a network-customized policy to other devices or entities, thereby providing a QoS guarantee mechanism for the FMSC network.

Optionally, in an embodiment of the present disclosure, the first space-based core network device or the first terrestrial core network device performs inter-network QoS collaborative management with the second space-based core network device and/or the second terrestrial core network device, including performing inter-network QoS guarantee level negotiation or inter-network QoS guarantee mechanism negotiation with the second space-based core network device and/or the second terrestrial core network device.

Inter-network QoS guarantee level negotiation includes multiple QoS collaborative management functions performing inter-network QoS capability negotiation regarding a QoS-guarantee-related indicator and an access type based on a handshake message, to establish a consistent classification of guarantee levels across the networks, including bandwidth level, latency level, jitter level, packet loss rate level, etc.

The inter-network QoS guarantee mechanism negotiation includes multiple QoS collaborative management functions performing inter-network QoS capability negotiation regarding an interface, a message, and a process based on a handshake message, to establish interoperable QoS-guarantee-related interfaces, messages, and processes across the networks.

Specifically, the first space-based core network device or the first terrestrial core network device performs, based on the user-customized QoS requirement configurations of all users in the network, a QoS-guaranteed network capability evaluation and a QoS-guaranteed network resource evaluation on the first space-based core network device or the first terrestrial core network device, to obtain the first QoS-guaranteed network capability evaluation result and the first QoS-guaranteed network resource evaluation result.

The QoS-guaranteed network capability evaluation is used to determine the QoS guarantee indicators (including bandwidth, latency, jitter, packet loss rate, etc.) and QoS guarantee levels (e.g., bandwidth level 1, bandwidth level 2, bandwidth level 3, bandwidth level 4) that can be provided by the terrestrial network/space-based network (e.g., the space-based network to which the first space-based core network device belongs, and the terrestrial network to which the first terrestrial core network device belongs). The QoS-guaranteed network resource evaluation is used to determine the QoS guarantee indicators and QoS guarantee levels that can be provided by the terrestrial network/space-based network for users at each level under specified temporal and spatial conditions. For example, providing level 1 QoS guarantee users with bandwidth level 1 and latency level 1 QoS-guaranteed services; providing level 2 QoS guarantee users with bandwidth level 2 and latency level 2 QoS-guaranteed services; providing level 3 QoS guarantee users with bandwidth level 2, latency level 2, jitter level 1, and packet loss rate level 1 QoS-guaranteed services; and providing level 4 QoS guarantee users with bandwidth level 3, latency level 3, jitter level 2, and packet loss rate level 2 QoS-guaranteed services.

Subsequently, the first space-based core network device or the first terrestrial core network device sends the first QoS-guaranteed network capability evaluation result and/or the first QoS-guaranteed network resource evaluation result to the second space-based core network device and/or the second terrestrial core network device.

Specifically, after the QoS collaborative management function of the first space-based core network device or the first terrestrial core network device completes the QoS-guaranteed network capability and network resource evaluation of the terrestrial network/space-based network, it stores the evaluation results locally and synchronizes them with other QoS collaborative management functions. After the evaluation results are synchronized, all QoS collaborative management functions maintain records of the QoS-guaranteed services available to all users in each terrestrial network/space-based network.

Optionally, the first space-based core network device or the first terrestrial core network device may further classify the users of the first space-based core network device and/or the first terrestrial core network device to obtain the classification result, and send the user-customized QoS requirement configuration of the users of the first space-based core network device and/or the first terrestrial core network device and the classification result to the second space-based core network device and/or the second terrestrial core network device.

For example, the first space-based core network device or the first terrestrial core network device may further classify the users of the first space-based core network device and/or the first terrestrial core network device as Level 1/Level 2/Level 3/Level 4 QoS guaranteed users, etc.

In an embodiment of the present disclosure, the first space-based core network device or the first terrestrial core network device can also perform capability negotiation with the space-based service platform or the terrestrial service platform to generate a configuration template of a QoS-guarantee-related indicator. In an embodiment of the present disclosure, the specific form of negotiation is not limited. For example, the space-based service platform or the terrestrial service platform can provide optional information such as QoS indicators and guarantee levels to the first space-based core network device or the first terrestrial core network device, and the first space-based core network device or the first terrestrial core network device generates a configuration template of the QoS-guarantee-related indicator based on this information.

The configuration template of the QoS-guarantee-related indicator includes: a QoS-guarantee-related indicator; an access type option; and a QoS guarantee level option corresponding to the access type option.

The QoS-guarantee-related indicator includes bandwidth, latency, jitter, packet loss rate, etc.; the access type option includes a fixed access, a mobile access, an LEO/MEO/GEO satellite access, and the guarantee level is determined based on the connection capability of the access type.

For example, the configuration template of the QoS-guarantee-related indicator is shown in Table 1.

**Table 1**

| Indicator | Access Type | Guarantee Level |
|---|---|---|
| Bandwidth | Fixed Access | □Bandwidth Level 1, □Bandwidth Level 2, □Bandwidth Level 3, □Bandwidth Level 4 |
| | Mobile Access | □Bandwidth Level 1, □Bandwidth Level 2, □Bandwidth Level 3, □Bandwidth Level 4 |
| | LEO Satellite Access | □Bandwidth Level 1, □Bandwidth Level 2, □Bandwidth Level 3 |
| | MEO Satellite Access | □Bandwidth Level 1, □Bandwidth Level 2 |
| | GEO Satellite Access | □Bandwidth Level 1, □Bandwidth Level 2 |
| Latency | Fixed Access | □Latency Level 1, □Latency Level 2, □Latency Level 3, □Latency Level 4 |
| | Mobile Access | □Latency Level 1, □Latency Level 2, □Latency Level 3, □Latency Level 4 |
| | LEO Satellite Access | □Latency Level 1, □Latency Level 2, □Latency Level 3 |
| | MEO Satellite Access | □Latency Level 1, □Latency Level 2 |
| | GEO Satellite Access | □Latency Level 1, □Latency Level 2 |
| Jitter | Fixed Access | □Jitter Level 1, □Jitter Level 2, □Jitter Level 3, □Jitter Level 4 |
| | Mobile Access | OJitter Level 1, □Jitter Level 2, □Jitter Level 3 |
| | LEO Satellite Access | □Jitter Level 1, □Jitter Level 2 |
| | MEO Satellite Access | □Jitter Level 1, □Jitter Level 2 |
| | GEO Satellite Access | □Jitter Level 1, □Jitter Level 2, □Jitter Level 3 |
| Packet Loss Rate | Fixed Access | □Packet Loss Rate Level 1, □Packet Loss Rate Level 2, □Packet Loss Rate Level 3, □Packet Loss Rate Level 4 |
| | Mobile Access | □Packet Loss Rate Level 1, □Packet Loss Rate Level 2, □Packet Loss Rate Level 3, □Packet Loss Rate Level 4 |
| | LEO Satellite Access | □Packet Loss Rate Level 1, □Packet Loss Rate Level 2, □Packet Loss Rate Level 3 |
| | MEO Satellite Access | □Packet Loss Rate Level 1, □Packet Loss Rate Level 2 |
| | GEO Satellite Access | □Packet Loss Rate Level 1 |

In this embodiment, Level 1 for each indicator represents the lowest guarantee level, corresponding to the minimum bandwidth requirement, maximum latency requirement, maximum jitter requirement, and maximum packet loss rate requirement; Level 4 represents the highest guarantee level. For each indicator-access type, a user may select one or more guarantee levels (with requirements), or select no guarantee level (without requirements). When the user selects more indicators and/or a higher guarantee level, the service fee may increase accordingly.

In an embodiment of the present disclosure, the first space-based core network device or the first terrestrial core network device may also send a configuration template of the QoS-guarantee-related indicator to a multi-connectivity terminal to obtain a user-customized QoS requirement configuration. Correspondingly, the first space-based core network device or the first terrestrial core network device may also receive a user-customized QoS requirement configuration, wherein the user-customized QoS requirement configuration is obtained based on the configuration template of the QoS-guarantee-related indicator. In this way, the differentiated QoS guarantee requirements of users with different terminal types and different network types can be met, thereby enabling a refined QoS-guaranteed service.

As demonstrated by the above, in an embodiment of the present disclosure, a QoS guarantee system and method are designed based on a characteristic of the FMSC network. In an embodiment of the present disclosure, a QoS collaborative management function is proposed to perform hierarchical management of a user in the terrestrial network/space-based network, and to perform QoS-guaranteed network capability evaluation and network resource evaluation. Based on the matching condition between terrestrial/space-based network resources and the total QoS-guaranteed network resource requirement, a customized QoS policy is generated and implemented. Therefore, using the solution of the present disclosure, end-to-end and systematic enhancements are achieved for FMSC network environments, providing multi-connectivity, customized, and differentiated QoS-guaranteed services. This approach meets the QoS assurance requirements of multiple types of networks and users, while avoiding network congestion caused by certain users or services occupying excessive resources.

Referring to FIG. 3, which is a flowchart of a QoS guarantee method for an FMSC network according to an embodiment of the present disclosure. This embodiment is applied to a multi-connectivity terminal and includes the following steps.

Step 301: receiving a network-customized QoS policy.

The network-customized QoS policy includes one or more of: a QoS policy at Protocol Data Unit (PDU) granularity; a QoS policy at flow granularity; a QoS policy at service granularity; and a QoS policy at user granularity.

Step 302: executing the network-customized QoS policy.

Optionally, the multi-connectivity terminal may also receive a configuration template of the QoS-guarantee-related indicator, generate a user-customized QoS requirement configuration based on the configuration template of the QoS-guarantee-related indicator, and send the user-customized QoS requirement configuration to the space-based core network device or the terrestrial core network device.

The description of the configuration template of the QoS-guarantee-related indicator may refer to the foregoing embodiments. The user fills in the QoS-guarantee-related indicator requirement on the multi-connectivity terminal based on the template, including at least one QoS-guarantee-related indicator. Each QoS-guarantee-related indicator includes at least one access type option and at least one corresponding guarantee level option, thereby completing the user-customized QoS requirement configuration.

After completing the user-customized QoS requirement configuration, the multi-connectivity terminal sends the user-customized QoS requirement configuration to the QoS collaborative management function of the PCF in the terrestrial/space-based core network.

In an embodiment of the present disclosure, the first space-based core network device or the first terrestrial core network device is configured to generate and send a network-customized policy to other devices or entities, thereby providing a QoS guarantee mechanism for the FMSC network.

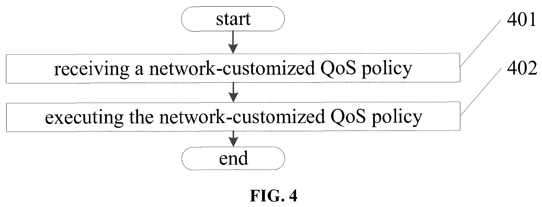

Referring to FIG. 4, it is a flowchart of a QoS guarantee method for an FMSC network according to an embodiment of the present disclosure. This embodiment is applied to one or more of: a fixed access network, a mobile access network, a satellite access network, a terrestrial service platform, and a space-based service platform, including the following steps.

Step 401: receiving a network-customized QoS policy.

The network-customized QoS policy includes one or more of: a QoS policy at Protocol Data Unit (PDU) granularity; a QoS policy at flow granularity; a QoS policy at service granularity; and a QoS policy at user granularity.

Step 402: executing the network-customized QoS policy.

When the method is applied to a terrestrial service platform or a space-based service platform, the method further includes:
performing capability negotiation with a terrestrial core network device or a space-based core network device, to generate a configuration template for a QoS-guarantee-related indicator.

In an embodiment of the present disclosure, the first space-based core network device or the first terrestrial core network device is configured to generate and send a network-customized policy to other devices or entities, thereby providing a QoS guarantee mechanism for the FMSC network.

The following describes a QoS guarantee method for an FMSC network according to an embodiment of the present disclosure, with reference to the system shown in FIG. 1.

### I. User-Customized QoS Requirement Configuration Method

The user configures customized QoS requirements on the multi-connectivity terminal. The specific method is as follows.

The QoS collaborative management function of the PCF in the terrestrial/space-based core network, through capability negotiation with the terrestrial/space-based service platform, generates a configuration template of the QoS-guarantee-related indicator (as shown in Table 1). This template is stored in the QoS collaborative management function. The QoS-guarantee-related indicator includes bandwidth, latency, jitter, packet loss rate, etc. The configuration template includes multiple access type options and multiple guarantee level options corresponding to each access type option. The access type option includes fixed access, mobile access, and LEO/MEO/GEO satellite access. The guarantee level is determined based on the connection capability of the corresponding access type.

The multi-connectivity terminal obtains a configuration template of the QoS-guarantee-related indicator from the QoS collaborative management function of the PCF in the terrestrial/space-based core network. The user fills in the QoS-guarantee-related indicator requirement on the multi-connectivity terminal based on the template, including at least one QoS-guarantee-related indicator. Each QoS-guarantee-related indicator includes at least one access type option and at least one corresponding guarantee level option, thereby completing the user-customized QoS requirement configuration.

After completing the user-customized QoS requirement configuration, the multi-connectivity terminal sends the user-customized QoS requirement configuration to the QoS collaborative management function of the PCF in the terrestrial/space-based core network.

### II. Inter-network QoS Collaborative Management Method

The PCFs of both the terrestrial core network and the space-based core network have added a QoS collaborative management function to perform inter-network QoS collaborative management. The specific method is as follows.

The QoS collaborative management function of the PCF in the terrestrial/space-based core network performs inter-network QoS guarantee level negotiation. This involves multiple QoS collaborative management functions performing inter-network QoS capability negotiation regarding a QoS-guarantee-related indicator and an access type based on a handshake message, to establish a consistent guarantee level classification across the networks, including bandwidth level, latency level, jitter level, and packet loss rate level, etc. Furthermore, the QoS collaborative management function of the PCF in the terrestrial/space-based core network performs inter-network QoS guarantee mechanism negotiation. This involves multiple QoS collaborative management functions performing inter-network QoS capability negotiation regarding an interface, a message, and a process based on a handshake message, to establish interoperable QoS-guarantee-related interfaces, messages, and processes across the networks.

The QoS collaborative management function of the PCF in the terrestrial/space-based core network receives user-customized QoS requirement configuration sent by the multi-connectivity terminal, classifies the users in the terrestrial/space-based network as Level 1/Level 2/Level 3/Level 4 QoS-guaranteed users, and synchronizes both the user-customized QoS requirement configuration and the classification result with other QoS collaborative management functions.

The QoS collaborative management function performs the QoS-guaranteed network capability evaluation and network resources evaluation of the terrestrial/space-based network based on user-customized QoS requirement configurations of all users. The QoS-guaranteed network capability evaluation determines the QoS guarantee indicators (including bandwidth, latency, jitter, packet loss rate, etc.) and QoS guarantee levels (e.g., bandwidth level 1, bandwidth level 2, bandwidth level 3, bandwidth level 4) that can be provided by the terrestrial/space-based network. The QoS-guaranteed network resource evaluation determines the specific QoS guarantee indicators and QoS guarantee levels that can be provided by the terrestrial/space-based network for users at each level under specified temporal and spatial conditions. For example, providing level 1 QoS guarantee users with bandwidth level 1 and latency level 1 QoS-guaranteed services; providing level 2 QoS guarantee users with bandwidth level 2 and latency level 2 QoS-guaranteed services; providing level 3 QoS guarantee users with bandwidth level 2, latency level 2, jitter level 1, and packet loss rate level 1 QoS-guaranteed services; and providing level 4 QoS guarantee users with bandwidth level 3, latency level 3, jitter level 2, and packet loss rate level 2 QoS-guaranteed services.

After completing the QoS-guaranteed network capability and network resource evaluation of the terrestrial/space-based network, the QoS collaborative management function stores the evaluation results locally and synchronizes them with other QoS collaborative management functions. After the evaluation results are synchronized, all QoS collaborative management functions maintain records of the QoS-guaranteed services available to all users in each terrestrial/space-based network.

Through the aforementioned collaborative management, differences in communication systems between fixed, mobile, and satellite networks can be overcome, enabling the provision of consistent QoS-guaranteed services. When the multi-connectivity terminal switches access methods, continuous and effective QoS guarantees can be provided, enhancing the user experience.

### III. Network-Customized QoS Policy Generation and Execution Method

The QoS collaborative management function of the PCF in the terrestrial/space-based core network generates a network-customized QoS policy according to the scenario, and delivers the policy to the terrestrial/space-based core network, fixed/mobile/satellite access network, and multi-connectivity terminal for execution. The specific method is as follows.

The QoS collaborative management function of the PCF in the terrestrial/space-based core network obtains the list of QoS-guaranteed users registered in the core network from the Unified Security Management (USM)/Unified Data Management (UDM) of the core network. It then calculates the QoS-guaranteed network resource requirement of a user at each level in the terrestrial/space-based network, as well as the total QoS-guaranteed network resource requirements of all users in the terrestrial/space-based network.

The QoS collaborative management function of the PCF in the terrestrial/space-based core network generates customized the QoS policy based on the matching condition between the terrestrial/space-based network resources and the total QoS-guaranteed network resource requirement. The policy includes QoS policies at the PDU session granularity, flow granularity, service granularity, and user granularity. The specific rules are as follows.

When the total QoS-guaranteed network resource requirement is greater than or equal to the terrestrial/space-based network resource requirement, QoS guarantee degradation is applied to a part or all user levels. Specifically, when the total QoS-guaranteed network resource requirement is greater than or equal to the terrestrial/space-based network resource requirement, either of the following two options can be selected: 1) providing a QoS-guaranteed service to a user according to a preset QoS guarantee level; 2) upgrading QoS guarantee for users at a part or all of QoS guarantee levels.

The QoS collaborative management function of the PCF in the terrestrial/space-based core network delivers the network-customized QoS policy to the terrestrial/space-based core network, fixed/mobile/satellite access network, multi-connectivity terminal, and terrestrial/space-based service platform. The terrestrial/space-based core network, fixed/mobile/satellite access network, multi-connectivity terminal, and terrestrial/space-based service platform then execute the network-customized QoS policy according to a known procedure.

In particular, when the multi-connectivity terminal switches between terrestrial and space-based networks, the QoS collaborative management function of the PCF in a handover target terrestrial/space-based core network provides QoS-guaranteed services to users according to the preset QoS guarantee level, ensuring the service experience for users during access switching.

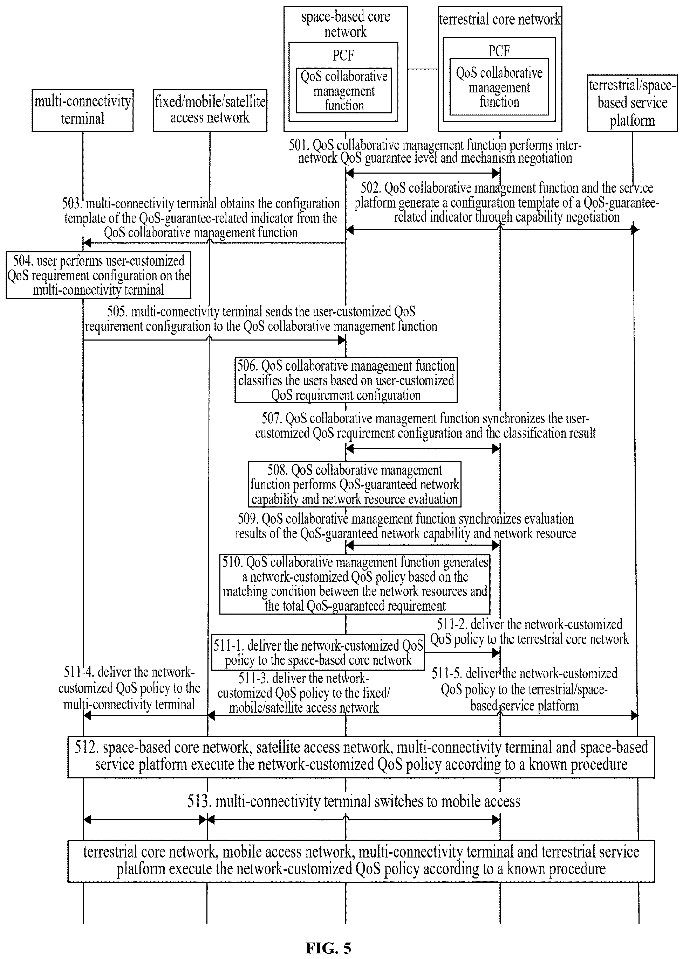

Referring to FIG. 5, it is a schematic diagram of the QoS guarantee process for an FMSC network according to an embodiment of the present disclosure. The process may include the following steps.

Step 501): the QoS collaborative management function of the PCF in the terrestrial core network and the space-based core network performs inter-network QoS guarantee level and mechanism negotiation.

Step 502): the QoS collaborative management function of the PCF in the space-based core network and the terrestrial service platform/space-based service platform generate a configuration template of a QoS-guarantee-related indicator through capability negotiation. The template is stored in the QoS collaborative management function.

Step 503): the multi-connectivity terminal uses satellite access to obtain the configuration template of the QoS-guarantee-related indicator from the QoS collaborative management function of the PCF in the space-based core network.

Step 504): the user performs customized QoS requirement configuration on the multi-connectivity terminal, that is, fills in the requirement of QoS-guarantee-related indicator based on template.

Step 505): the multi-connectivity terminal sends the user-customized QoS requirement configuration to the QoS collaborative management function of the PCF in the space-based core network.

Step 506): the QoS collaborative management function of the PCF in the space-based core network receives user-customized QoS requirement configuration sent by the multi-connectivity terminal and classifies the users in the network.

Step 507): the QoS collaborative management function of the PCF in the terrestrial core network and the space-based core network synchronizes the user-customized QoS requirement configuration and the classification result.

Step 508): the QoS collaborative management function of the PCF in the space-based core network performs QoS-guaranteed network capability and network resource evaluation based on user-customized QoS requirement configurations of all users.

Step 509): the QoS collaborative management function of the PCF in the terrestrial core network and the space-based core network synchronizes evaluation results of the QoS-guaranteed network capability and network resource.

Step 510): the QoS collaborative management function of the PCF in the space-based core network generates a network-customized QoS policy based on the matching condition between the network resources and the total QoS-guaranteed network resource requirement. The policy includes QoS policies at the PDU session granularity, flow granularity, service granularity, and user granularity.

Step 511): the QoS collaborative management function of the PCF in the space-based core network delivers the network-customized QoS policy to the space-based core network, the terrestrial core network, the fixed/mobile/satellite access network, the multi-connectivity terminal and the terrestrial/space-based service platform. This process may correspondingly include steps 511-1, 511-2, 511-3, 511-4 and 511-5 in this figure.

Step 512): the space-based core network, satellite access network, multi-connectivity terminal and space-based service platform execute the network-customized QoS policy according to a known procedure.

Step 513): the multi-connectivity terminal switches to mobile access and establishes a communication connection with the terrestrial core network.

Step 514): the terrestrial core network, mobile access network, multi-connectivity terminal and terrestrial service platform execute the network-customized QoS policy according to a known procedure.

As demonstrated by the above embodiments, the solutions of the embodiments of the present disclosure provide multi-connection, customized, and differentiated QoS-guaranteed services in a heterogeneous network environment, achieving user-granular QoS-guaranteed services.

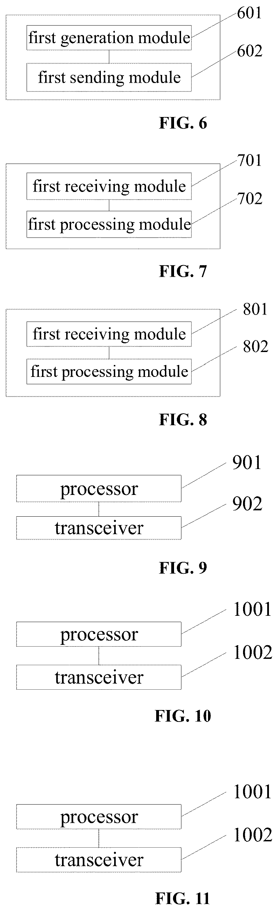

Referring to FIG. 6, it is a structural diagram of a QoS guarantee apparatus for an FMSC network provided in an embodiment of the present disclosure. The apparatus is applied to a first space-based core network device or a first terrestrial core network device, and includes:
a first generation module 601, configured to generate a network-customized QoS policy;
a first sending module 602, configured to send the network-customized QoS policy, wherein a recipient of the network-customized QoS policy includes one or more of:
   a space-based core network, a terrestrial core network, a fixed access network, a mobile access network, a satellite access network, a multi-connectivity terminal, a terrestrial service platform, and a space-based service platform,
   wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the first generation module includes:
a determination submodule, configured to determine a total QoS-guaranteed network resource requirement of the first space-based core network device or the first terrestrial core network device;
a generation submodule, configured to generate the network-customized QoS policy based on a matching condition between a network resource of the first space-based core network device or the first terrestrial core network device and the total QoS-guaranteed network resource requirement.

Optionally, the determination submodule is configured to:
determine the QoS-guaranteed network resource requirement of a user at each level of the first space-based core network device or the first terrestrial core network device;
determine, based on the QoS-guaranteed network resource requirement of the user at each level, the total QoS-guaranteed network resource requirement of the first space-based core network device or the first terrestrial core network device.

Optionally, the generation submodule is configured to:
when the total QoS-guaranteed network resource requirement is greater than or equal to the network resource of the first space-based core network device or the first terrestrial core network device, generate the network-customized QoS policy, wherein the network-customized QoS policy includes:
providing a QoS-guaranteed service to a user according to a preset QoS guarantee level; or
upgrading QoS guarantee for users at a part or all of QoS guarantee levels.

Optionally, the apparatus may further include:
when the first space-based core network device or the first terrestrial core network device is a handover target space-based core network device or terrestrial core network device, provide a QoS-guaranteed service to a user according to a preset QoS guarantee level.

Optionally, the apparatus may further include:
a second processing module, configured to perform inter-network QoS collaborative management with a second space-based core network device and/or a second terrestrial core network device.

Optionally, the second processing module is further configured to:
perform inter-network QoS guarantee level negotiation or inter-network QoS guarantee mechanism negotiation with the second space-based core network device and/or the second terrestrial core network device.

Optionally, the second processing module is further configured to:
perform, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
send the first QoS-guaranteed network capability evaluation result and/or the first QoS-guaranteed network resource evaluation result to the second space-based core network device and/or the second terrestrial core network device.

Optionally, the apparatus may further include:
a third processing module, configured to classify users of the first space-based core network device and/or the first terrestrial core network device to obtain a classification result;
a second sending module, configured to send a user-customized QoS requirement configuration of the users of the first space-based core network device and/or the first terrestrial core network device and the classification result to the second space-based core network device and/or the second terrestrial core network device.

Optionally, the apparatus may further include:
a second generation module, configured to perform capability negotiation with a space-based service platform or a terrestrial service platform, to generate a configuration template of a QoS-guarantee-related indicator.

Optionally, the apparatus may further include:
a third sending module, configured to send the configuration template of the QoS-guarantee-related indicator.

Optionally, the apparatus may further include:
a first receiving module, configured to receive a user-customized QoS requirement configuration, wherein the user-customized QoS requirement configuration is obtained based on the configuration template of the QoS-guarantee-related indicator.

Optionally, the configuration template of the QoS-guarantee-related indicator includes: a QoS-guarantee-related indicator; an access type option; and a QoS guarantee level option corresponding to the access type option.

The apparatus provided in an embodiment of the present disclosure may implement the above-described method embodiments. The implementation principles and technical effects are similar, and thus will not be further described herein.

Referring to FIG. 7, which is a structural diagram of a QoS guarantee apparatus for an FMSC network provided in an embodiment of the present disclosure, applied to a multi-connectivity terminal. As shown in FIG. 7, the QoS guarantee apparatus for the FMSC network includes:
a first receiving module 701, configured to receive a network-customized QoS policy; a first processing module 702, configured to execute the network-customized QoS policy;
the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus may further include:
a second receiving module, configured to receive a configuration template of a QoS-guarantee-related indicator;
a first generation module, configured to generate a user-customized QoS requirement configuration based on the configuration template of the QoS-guarantee-related indicator;
a first sending module, configured to send the user-customized QoS requirement configuration.

The apparatus provided in an embodiment of the present disclosure may implement the above-described method embodiments. The implementation principles and technical effects are similar, and thus will not be further described herein.

Referring to FIG. 8, which is a structural diagram of a QoS guarantee apparatus for an FMSC network provided in an embodiment of the present disclosure. The apparatus is applied to one or more of: a fixed access network, a mobile access network, a satellite access network, a terrestrial service platform, and a space-based service platform. As shown in FIG. 8, the QoS guarantee apparatus for the FMSC network includes:
a first receiving module 801, configured to receive a network-customized QoS policy; a first processing module 802, configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus is applied to a terrestrial service platform or a space-based service platform, and the apparatus further includes:
a second processing module, configured to perform capability negotiation with terrestrial core network device or space-based core network device, to generate a configuration template of a QoS-guarantee-related indicator.

The apparatus provided in an embodiment of the present disclosure may implement the above-described method embodiments. The implementation principles and technical effects are similar, and thus will not be further described herein.

Referring to FIG. 9, it is a structural diagram of a QoS guarantee apparatus for an FMSC network provided in an embodiment of the present disclosure. The apparatus is applied to a first space-based core network device or a first terrestrial core network device, and includes: a processor 901 and a transceiver 902;
the processor 901 is configured to generate a network-customized QoS policy;
the transceiver 902 is configured to send network-customized QoS policy, wherein a recipient of the network-customized QoS policy includes one or more of:
   a space-based core network, a terrestrial core network, a fixed access network, a mobile access network, a satellite access network, a multi-connectivity terminal, a terrestrial service platform, and a space-based service platform;
   wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the processor 901 is further configured to:
determine a total QoS-guaranteed network resource requirement of the first space-based core network device or the first terrestrial core network device;
generate the network-customized QoS policy based on a matching condition between a network resource of the first space-based core network device or the first terrestrial core network device and the total QoS-guaranteed network resource requirement.

Optionally, the processor 901 is further configured to:
determine the QoS-guaranteed network resource requirement of a user at each level of the first space-based core network device or the first terrestrial core network device;
determine, based on the QoS-guaranteed network resource requirement of the user at each level, the total QoS-guaranteed network resource requirement of the first space-based core network device or the first terrestrial core network device.

Optionally, the processor 901 is further configured to:
when the total QoS-guaranteed network resource requirement is greater than or equal to the network resource of the first space-based core network device or the first terrestrial core network device, generate the network-customized QoS policy, wherein the network-customized QoS policy includes:
providing a QoS-guaranteed service to a user according to a preset QoS guarantee level; or
upgrading QoS guarantee for users at a part or all of QoS guarantee levels.

Optionally, the processor 901 is further configured to:
when the first space-based core network device or the first terrestrial core network device is a handover target space-based core network device or terrestrial core network device, provide a QoS-guaranteed service to a user according to a preset QoS guarantee level.

Optionally, the processor 901 is further configured to:
perform inter-network QoS collaborative management with a second space-based core network device and/or a second terrestrial core network device.

Optionally, the processor 901 is further configured to:
perform inter-network QoS guarantee level negotiation or inter-network QoS guarantee mechanism negotiation with the second space-based core network device and/or the second terrestrial core network device.

Optionally, the processor 901 is further configured to:
perform, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
send the first QoS-guaranteed network capability evaluation result and/or the first QoS-guaranteed network resource evaluation result to the second space-based core network device and/or the second terrestrial core network device.

Optionally, the processor 901 is further configured to:
classify users of the first space-based core network device and/or the first terrestrial core network device to obtain a classification result;
send a user-customized QoS requirement configuration of the users of the first space-based core network device and/or the first terrestrial core network device and the classification result to the second space-based core network device and/or the second terrestrial core network device.

Optionally, the processor 901 is further configured to:
perform capability negotiation with a space-based service platform or a terrestrial service platform, to generate a configuration template of a QoS-guarantee-related indicator.

Optionally, the transceiver 902 is further configured to:
send the configuration template of the QoS-guarantee-related indicator.

Optionally, the transceiver 902 is further configured to:
receive a user-customized QoS requirement configuration, wherein the user-customized QoS requirement configuration is obtained based on the configuration template of the QoS-guarantee-related indicator.

Optionally, the configuration template of the QoS-guarantee-related indicator includes: a QoS-guarantee-related indicator; an access type option; and a QoS guarantee level option corresponding to the access type option.

The apparatus provided in an embodiment of the present disclosure may implement the above-described method embodiments. The implementation principles and technical effects are similar, and thus will not be further described herein.

Referring to FIG. 10, which is a structural diagram of a QoS guarantee apparatus for an FMSC network provided in an embodiment of the present disclosure. The apparatus is applied to a multi-connectivity terminal, and includes: a processor 1001 and a transceiver 1002;
the transceiver 1002 is configured to receive a network-customized QoS policy;
the processor 1001 is configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the processor 1001 is further configured to:
receive a configuration template of the QoS-guarantee-related indicator;
generate a user-customized QoS requirement configuration based on the configuration template of the QoS-guarantee-related indicator;
send the user-customized QoS requirement configuration.

The apparatus provided in an embodiment of the present disclosure may implement the above-described method embodiments. The implementation principles and technical effects are similar, and thus will not be further described herein.

Referring to FIG. 11, which is a structural diagram of a QoS guarantee apparatus for an FMSC network provided in an embodiment of the present disclosure. The apparatus is applied to one or more of: a fixed access network, a mobile access network, a satellite access network, a terrestrial service platform, and a space-based service platform, and includes: a processor 1101 and a transceiver 1102;
the transceiver 1102 is configured to receive a network-customized QoS policy;
the processor 1101 is configured to execute the network-customized QoS policy;
wherein the network-customized QoS policy includes one or more of: a QoS policy at Protocol Data Unit (PDU) granularity; a QoS policy at flow granularity; a QoS policy at service granularity; and a QoS policy at user granularity.

Optionally, the apparatus is applied to a terrestrial service platform or a space-based service platform;
the processor 1101 is further configured to perform capability negotiation with terrestrial core network device or space-based core network device, to generate a configuration template of a QoS-guarantee-related indicator.

The apparatus provided in an embodiment of the present disclosure may implement the above-described method embodiments. The implementation principles and technical effects are similar, and thus will not be further described herein.

It should be noted that the division of units in embodiments of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present disclosure may be implemented in a form of a software product. The computer software product is stored in a storage medium, and includes multiple instructions to cause a computer device (which can be a personal computer, a server, or a network device, etc.) or a processor to execute all or part of the steps of the methods described in various embodiments of the present disclosure. The aforementioned storage medium include: U disk, removable hard disk, Read-Only Memory (ROM), Random Access Memory (RAM), magnetic disk or optical disc and other medium that can store program code.

The present disclosure provides a communication device, including: a memory, a processor, and a program stored in the memory and used to be executed by the processor; the processor is configured to read the program in the memory to implement the steps in the QoS guarantee method for the FMSC network as described above.

The present disclosure further provides a readable storage medium storing a program. The program is used to be executed by a processor to implement the processes of the above-described embodiments of the QoS guarantee method for the FMSC network, and can achieve the same technical effect. For the sake of brevity, the details are not repeated herein. The readable storage medium may be any available medium or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

It should be noted that in the present disclosure, the terms "comprise," "include," or any other variations thereof are intended to cover a non-exclusive inclusion, such that a process, method, article, or apparatus that comprises a list of elements not only includes those elements, but may further include other elements not expressly listed, or further includes elements inherent to such process, method, article, or apparatus. Without further limitation, an element defined by the phrase "comprises a..." does not exclude the presence of additional identical elements in the process, method, article, or apparatus that includes the element.

Through the above description of the embodiments, those skilled in the art can clearly understand that the methods of the above embodiments can be implemented by means of software in combination with necessary general hardware platforms. Obviously, they can also be implemented by hardware, but in many cases, the former is a better implementation. Based on such an understanding, essential parts, or parts contributing to the prior art, or the entirety or parts of the technical solution of the present disclosure may be implemented in a form of a software product. The computer software product is stored in a storage medium (such as ROM/RAM, magnetic disk, optical disk), and includes several instructions to cause a terminal (which may be a mobile phone, computer, server, air conditioner, or network device, etc.) to execute the methods according to the various embodiments of this application.

The embodiments of the present disclosure have been described above with reference to the accompanying drawings. However, the present disclosure is not limited to the specific embodiments described above. The specific embodiments described above are merely illustrative rather than restrictive. Those of ordinary skill in the art, in light of the present disclosure, may make various modifications without departing from the spirit of the present disclosure and the scope of protection defined by the claims, and all such modifications shall fall within the protection scope of the present disclosure.

## Claims

1. A Quality of Service (QoS) guarantee method for a Fixed, Mobile and Satellite Convergence (FMSC) network, applied to a first space-based core network device or a first terrestrial core network device, comprising:
generating a network-customized QoS policy;
sending the network-customized QoS policy, wherein a recipient of the network-customized QoS policy comprises one or more of:
a space-based core network, a terrestrial core network, a fixed access network, a mobile access network, a satellite access network, a multi-connectivity terminal, a terrestrial service platform, a space-based service platform;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

2. The method according to claim 1, wherein generating the network-customized QoS policy comprises:
determining a total QoS-guaranteed network resource requirement of the first space-based core network device or the first terrestrial core network device;
generating the network-customized QoS policy based on a matching condition between a network resource of the first space-based core network device or the first terrestrial core network device and the total QoS-guaranteed network resource requirement.

3. The method according to claim 2, wherein the determining the total QoS-guaranteed network resource requirement of the first space-based core network device or the first terrestrial core network device comprises:
determining the QoS-guaranteed network resource requirement of a user at each level of the first space-based core network device or the first terrestrial core network device;
determining, based on the QoS-guaranteed network resource requirement of the user at each level, the total QoS-guaranteed network resource requirement of the first space-based core network device or the first terrestrial core network device.

4. The method according to claim 2 or 3, wherein generating the network-customized QoS policy based on the matching condition between the network resource of the first space-based core network device or the first terrestrial core network device and the total QoS-guaranteed network resource requirement comprises:
when the total QoS-guaranteed network resource requirement is greater than or equal to the network resource of the first space-based core network device or the first terrestrial core network device, generating the network-customized QoS policy, wherein the network-customized QoS policy comprises:
providing a QoS-guaranteed service to a user according to a preset QoS guarantee level; or
upgrading QoS guarantee for users at a part or all of QoS guarantee levels.

5. The method according to any one of claims 1 to 4, further comprising:
when the first space-based core network device or the first terrestrial core network device is a handover target space-based core network device or terrestrial core network device, providing a QoS-guaranteed service to a user according to a preset QoS guarantee level.

6. The method according to any one of claims 1 to 5, further comprising:
performing inter-network QoS collaborative management with a second space-based core network device and/or a second terrestrial core network device.

7. The method according to claim 6, wherein the performing the inter-network QoS collaborative management with the second space-based core network device and/or the second terrestrial core network device comprises:
performing inter-network QoS guarantee level negotiation or inter-network QoS guarantee mechanism negotiation with the second space-based core network device and/or the second terrestrial core network device.

8. The method according to claim 7, wherein the performing the inter-network QoS guarantee level negotiation or the inter-network QoS guarantee mechanism negotiation with the second space-based core network device and/or the second terrestrial core network device comprises:
performing, based on user-customized QoS requirement configurations of all users in a network, QoS-guaranteed network capability evaluation and QoS-guaranteed network resource evaluation for the first space-based core network device or the first terrestrial core network device, to obtain a first QoS-guaranteed network capability evaluation result and a first QoS-guaranteed network resource evaluation result;
sending the first QoS-guaranteed network capability evaluation result and/or the first QoS-guaranteed network resource evaluation result to the second space-based core network device and/or the second terrestrial core network device.

9. The method according to claim 7 or 8, further comprising:
classifying users of the first space-based core network device and/or the first terrestrial core network device to obtain a classification result;
sending a user-customized QoS requirement configuration of the users of the first space-based core network device and/or the first terrestrial core network device and the classification result to the second space-based core network device and/or the second terrestrial core network device.

10. The method according to any one of claims 1 to 9, further comprising:
performing capability negotiation with a space-based service platform or a terrestrial service platform, to generate a configuration template of a QoS-guarantee-related indicator.

11. The method according to claim 10, further comprising:
sending the configuration template of the QoS-guarantee-related indicator.

12. The method according to claim 11, further comprising:
receiving a user-customized QoS requirement configuration, wherein the user-customized QoS requirement configuration is obtained based on the configuration template of the QoS-guarantee-related indicator.

13. The method according to any one of claims 10 to 12, wherein the configuration template of the QoS-guarantee-related indicator comprises:
a QoS-guarantee-related indicator;
an access type option;
a QoS guarantee level option corresponding to the access type option.

14. A Quality of Service (QoS) guarantee method for a Fixed, Mobile and Satellite Convergence (FMSC) network, applied to a multi-connectivity terminal, comprising:
receiving a network-customized QoS policy;
executing the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

15. The method according to claim 14, further comprising:
receiving a configuration template of a QoS-guarantee-related indicator;
generating a user-customized QoS requirement configuration based on the configuration template of the QoS-guarantee-related indicator;
sending the user-customized QoS requirement configuration.

16. A Quality of Service (QoS) guarantee method for a Fixed, Mobile and Satellite Convergence (FMSC) network, applied to one or more of a fixed access network, a mobile access network, a satellite access network, a terrestrial service platform, and a space-based service platform, comprising:
receiving a network-customized QoS policy;
executing the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

17. The method according to claim 16, applied to the terrestrial service platform or the space-based service platform, further comprising:
performing capability negotiation with a terrestrial core network device or a space-based core network device, to generate a configuration template for a QoS-guarantee-related indicator.

18. A Quality of Service (QoS) guarantee system for a Fixed, Mobile and Satellite Convergence (FMSC) network, comprising:
a space-based core network device arranged in a space-based core network, a terrestrial core network device arranged in a terrestrial core network, a fixed access network, a mobile access network, a satellite access network, a multi-connectivity terminal, a terrestrial service platform, and a space-based service platform;
wherein the space-based core network device or the terrestrial core network device is configured to generate and send a network-customized QoS policy, wherein a recipient of the network-customized QoS policy comprises one or more of: the space-based core network, the terrestrial core network, the fixed access network, the mobile access network, the satellite access network, the multi-connectivity terminal, the terrestrial service platform, and the space-based service platform;
one or more of the multi-connectivity terminals, the fixed access network, the mobile access network, the satellite access network, the terrestrial service platform, and the space-based service platform are configured to receive and execute the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

19. A Quality of Service (QoS) guarantee apparatus for a Fixed, Mobile and Satellite Convergence (FMSC) network, applied to a first space-based core network device or a first terrestrial core network device, comprising:
a first generation module, configured to generate a network-customized QoS policy.
a first sending module, configured to send the network-customized QoS policy, wherein a recipient of the network-customized QoS policy comprises one or more of:
a space-based core network, a terrestrial core network, a fixed access network, a mobile access network, a satellite access network, a multi-connectivity terminal, a terrestrial service platform, a space-based service platform;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

20. A Quality of Service (QoS) guarantee apparatus for a Fixed, Mobile and Satellite Convergence (FMSC) network, applied to a multi-connectivity terminal, comprising:
a first receiving module, configured to receive a network-customized QoS policy;
a first processing module, configured to execute the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

21. A Quality of Service (QoS) guarantee apparatus for a Fixed, Mobile and Satellite Convergence (FMSC) network, applied to one or more of a fixed access network, a mobile access network, a satellite access network, a terrestrial service platform, and a space-based service platform, comprising:
a first receiving module, configured to receive a network-customized QoS policy;
a first processing module, configured to execute the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

22. A Quality of Service (QoS) guarantee apparatus for a Fixed, Mobile and Satellite Convergence (FMSC) network, applied to a first space-based core network device or a first terrestrial core network device, comprising: a processor and a transceiver;
the processor is configured to generate a network-customized QoS policy;
the transceiver is configured to send the network-customized QoS policy, wherein a recipient of the network-customized QoS policy comprises one or more of:
a space-based core network, a terrestrial core network, a fixed access network, a mobile access network, a satellite access network, a multi-connectivity terminal, a terrestrial service platform, a space-based service platform;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

23. A Quality of Service (QoS) guarantee apparatus for a Fixed, Mobile and Satellite Convergence (FMSC) network, applied to a multi-connectivity terminal, comprising: a processor and a transceiver;
the transceiver is configured to receive a network-customized QoS policy;
the processor is configured to execute the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

24. A Quality of Service (QoS) guarantee apparatus for a Fixed, Mobile and Satellite Convergence (FMSC) network, applied to one or more of a fixed access network, a mobile access network, a satellite access network, a terrestrial service platform, and a space-based service platform, comprising: a processor and a transceiver;
the transceiver is configured to receive a network-customized QoS policy;
the processor is configured to execute the network-customized QoS policy;
wherein the network-customized QoS policy comprises one or more of:
a QoS policy at Protocol Data Unit (PDU) granularity;
a QoS policy at flow granularity;
a QoS policy at service granularity;
a QoS policy at user granularity.

25. A communication device, comprising: a memory, a processor, and a program stored in the memory and used to be executed by the processor; wherein the processor is configured to read the program in the memory to implement the steps of the QoS guarantee method for the FMSC network according to any one of claims 1 to 17.

26. A readable storage medium for storing a program, wherein the program is used to be executed by a processor to implement the steps of the QoS guarantee method for the FMSC network according to any one of claims 1 to 17.
